# EUROPEAN PATENT SPECIFICATION

(11) **EP 4 612 197 B1**
(45) Date of publication and mention of the grant of the patent: **18.03.2026**
(21) Application number: 23828738.7
(22) Date of filing: 13.12.2023
(51) Int. Cl.: C08G 2/06, C08G 2/10, C08G 2/28, C08L 59/04, C08G 2/18

(54) **METHOD FOR THE DEACTIVATION OF AN ACID CATALYST DURING THE PRODUCTION PROCESS OF A POLYOXYMETHYLENE COPOLYMER**
VERFAHREN ZUR DEAKTIVATION EINER SÄURE-KATALYSATOR WÄHREND DES PRODUKTIONSVERFAHRENS EINES POLYOXYMETHYLEN COPOLYMERS
METHODE DE DESACTIVATION D'UN CATALYSEUR ACIDE PENDANT LE PROCÉDÉ DE PRODUCTION D'UN COPOLYMÈRE POLYOXYMETHYLENE

(30) Priority: 21.12.2022 EP 22215617
(43) Date of publication of application: 10.09.2025
(73) Proprietor: BASF SE, 67056 Ludwigshafen am Rhein (DE); KOLON ENP, INC., Gimcheon-si Gyeongsangbuk-do 39537 (KR)
(72) Inventor: HEITZ, Thomas, 67056 Ludwigshafen am Rhein (DE); DEMETER, Juergen, 67056 Ludwigshafen am Rhein (DE); KNOLL, Konrad, 68199 Mannheim (DE); LANGLOTZ, Jutta Karin, 67056 Ludwigshafen am Rhein (DE); VON BOMHARD, Erika Sibylle Julaine, 67056 Ludwigshafen am Rhein (DE); CHOI, Jin-Sang, Gimcheon City 740-180 (KR); KIM, JongMoon, Gimcheon City 740-180 (KR)
(74) Representative: BASF IP Association
(86) International application number: PCT/EP2023/085684
(87) International publication number: WO 2024/132804

(56) References cited:
- WO-A1-2006/120218
- WO-A1-2020/011873
- DE-A1- 102005 046 593

## Description

The present invention relates to a method for the deactivation of an acid catalyst during the production process of a polyoxymethylene copolymer (cPOM) by adding (A) triisopropanolamine (tris(2-hydroxypropyl)amine) and/or (B) sodium carbonate and/or sodium hydrogen carbonate, preferably by adding (A) triisopropanolamine (tris(2-hydroxypropyl)amine) and (B) sodium carbonate and/or sodium hydrogen carbonate, to a mixture (M1) which comprises the polyoxymethylene copolymer (cPOM) and the acid catalyst.

In addition, the present invention relates to the use of (A) triisopropanolamine and (B) sodium carbonate and/or sodium hydrogen carbonate for the deactivation of an acid catalyst during the production of a polyoxymethylene copolymer (cPOM).

Moreover, the present invention relates to a method for the production of a polymer molding composition (PM) which comprises a polyoxymethylene copolymer (cPOM), the polymer molding composition (PM) obtained by the production method and the use of the polymer molding composition (PM) for the production of molded parts.

Polyoxymethylene copolymers are known for a long time. The polymers have a number of outstanding properties so that they are suitable for a wide variety of industrial applications. Polyoxymethylene copolymers are engineering thermoplastics and are used in various applications of transportation, electrics, electronics and consumer industries. Polyoxymethylene copolymers are also known as acetal resins, polyacetals and polyformaldehydes. For the production of polyoxymethylene copolymers, formaldehyde is generally converted to its cyclic oligomer, preferably to 1,3,5-trioxane. Polyoxymethylene copolymers can be obtained by the polymerization of the cyclic oligomers of formaldehyde, preferably 1,3,5-trioxane, and the comonomer/s in the presence of an acid catalyst. The polymerization can be carried out as a bulk polymerization, for example, in a melt kneader. After the polymerization reaction, raw polyoxymethylene copolymer is obtained which still comprises the acid catalyst. If the acid catalyst remains in the polyoxymethylene copolymer, it can catalyze the depolymerization reaction of the polyoxymethylene copolymer to formaldehyde, which leads to an unstable polyoxymethylene copolymer with inferior properties.

Therefore, after the polymerization, the acid catalyst typically is deactivated and the raw polyoxymethylene copolymer is typically further stabilized by the removal of residual monomers and the removal of unstable end groups in order to obtain the finished polyoxymethylene copolymer.

For the deactivation of the acid catalyst comprised in the raw polyoxymethylene copolymer, normally a deactivation agent is added to the raw polyoxymethylene copolymer. As a deactivation agent generally a basic compound is used. The basic compound that is used as a deactivation agent generally neutralizes the acid when the acid catalyst used is a Brønsted acid, like perfluoric acid or trifluoromethanesulfonic acid. Whereas, when the acid used is a Lewis acid, such as BF₃ derivatives, an acid-base product in form of an adduct or a salt, in other words, a complex of the acid catalyst and the basic compound, is formed, that remains in the polymer matrix of the polyoxymethylene copolymer.

The German patent application DE 3 703 790 discloses a method for the production of polyoxymethylene copolymers, wherein the acid catalyst is deactivated with triethylamine, triethanolamine or tri-n-butylamine.

The European patent application EP 1 688 461 also discloses a process for the production of polyoxymethylene copolymers, wherein the acid catalyst is deactivated by the addition of an amine, namely triethylamine.

The European patent application EP 0 244 245 discloses a process for the production of a polyoxymethylene copolymer, wherein hindered heterocyclic amines are used for the deactivation of the acid catalyst.

The German patent application DE 196 33 708 discloses a method for the production of polyoxymethylene copolymers, wherein the acid catalyst is deactivated with ammonia, trimethylamine, dimethylamine or triethylamine.

The US patent US 7,893,140 discloses a method for the production of polyoxymethylene copolymers, wherein the acid catalyst is deactivated with triethylamine, tributylamine, triethanolamine or tributanolamine.

The international patent application WO 93/22359 discloses a process for producing a polyoxymethylene copolymer by copolymerizing trioxane as a main monomer with a cyclic ether or a cyclic formal as a comonomer by using a cationically active catalyst, wherein an alkali metal fluoride is contacted with the copolymer after the completion of the copolymerization to thereby deactivate the polymerization catalyst.

The international patent application WO 2020/011873 A1 discloses a method for the deactivation of an acid catalyst during the production process of a polyoxymethylene copolymer (cPOM) by adding triisopropanolamine to a mixture which comprises the polyoxymethylene copolymer (cPOM) and the acid catalyst.

The methods for the production of polyoxymethylene copolymers and the deactivation agents used in the state of the art, however, lead to finished polyoxymethylene copolymers, which in some cases show insufficient thermal and hydrolytic stability. Moreover, in some cases, the polyoxymethylene copolymers obtained by the production methods described in the state-of-the-art show formaldehyde emissions that are too high and, therefore, the finished polyoxymethylene copolymers cannot be used in food or drinking water applications. In some cases, the polyoxymethylene copolymers obtained by the methods described in the state of the art, moreover, show a migration of the deactivation agent so that these polyoxymethylene copolymers also cannot be used for food contact or drinking water applications. Additionally, in some cases, the polyoxymethylene copolymers obtained by the production methods described in the state of the art show a lack of stability by coloring with common color masterbatches.

The object underlying the present invention is, therefore, to provide a method for the deactivation of an acid catalyst during the production process of polyoxymethylene copolymers, which leads to polyoxymethylene copolymers which do not have the above-mentioned disadvantages of the prior art or only to a significantly reduced extent. In particular, the method should lead to polyoxymethylene copolymers showing an improved thermal and hydrolytic stability, lower formaldehyde emissions and good color values as well as good mechanical properties, being appropriate for food contact or drinking water applications at the same time.

This object is solved by the method for the deactivation of an acid catalyst during the production process of a polyoxymethylene copolymer (cPOM), wherein the method for the deactivation of the acid catalyst comprises the steps:
a) providing a first mixture (M1) comprising the polyoxymethylene copolymer (cPOM) and the acid catalyst,
b) adding
   (A) triisopropanolamine and/or
   (B) sodium carbonate and/or sodium hydrogen carbonate
   to the first mixture (M1) to deactivate the acid catalyst in order to obtain a second mixture (M2) comprising
   the polyoxymethylene copolymer (cPOM) and
   a complex of the acid catalyst with component (A) and/or
   a reaction product of the acid catalyst with component (B),
c) optionally adding at least one additive to the second mixture (M2),
d) treating the second mixture (M2) at a temperature in the range from 180 to 280 °C under vacuum in order to obtain a third mixture (M3).

Another object of the present invention is the polymer molding composition (PM) obtained by the method according to claim 12.

It has surprisingly been found that if in a method for the production of a polyoxymethylene copolymer (cPOM) triisopropanolamine (component (A)), as well as sodium carbonate (Na₂CO₃) and/or sodium hydrogen carbonate (NaHCO₃) (component (B)), are used to deactivate the acid catalyst, the properties of the polyoxymethylene copolymers (cPOM) are improved. The polyoxymethylene copolymers (cPOM) show an improved thermal and hydrolytic stability, lower formaldehyde emissions and good color values as well as good mechanical properties.

Moreover, it has surprisingly been found that the complex of the acid catalyst with component (A) and/or the reaction product of the acid catalyst with component (B) which remains in the finished polyoxymethylene copolymer (cPOM) is stable and, therefore, the finished polyoxymethylene copolymer (cPOM) is thermally stable, hydrolytically stable, shows low formaldehyde emission and low migration of the deactivation agent and, therefore, is especially suitable for applications demanding contact to food or drinking water.

### Step a)

### First Mixture (M1)

In step a), a first mixture (M1) is provided, comprising the polyoxymethylene copolymer (cPOM) and the acid catalyst.

Polyoxymethylene copolymers (cPOMs) are known per se. They are preferably prepared by polymerization of trioxane (as a monomer) and one or more comonomers.

In general, the polyoxymethylene copolymer (cPOM) comprised in the first mixture (M1) comprises from 60 to 99.99 mol-% of -CH₂O- recurring units and from 0.01 to 40 mol-% of recurring units according to formula (I) 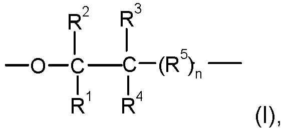 where R¹ to R⁴ are each, independently of one another, a hydrogen atom, a C₁-C₄-alkyl group or a alkoxy-substituted alkyl group having from 1 to 4 carbon atoms, and R⁵ is a chemical bond, a -CH₂-, -OCH₂-, a C₁-C₄-alkyl- or C₁-C₄-alkoxy-substituted methylene group or a corresponding oxymethylene group, and n is from 0 to 3, wherein the mol-% of the -CH₂O- recurring units and the mol-% of the recurring units according to formula (I) are based on the total number of mols of recurring units comprised in the polyoxymethylene copolymer (cPOM).

Preferably, the polyoxymethylene copolymer (cPOM) comprises 60 to 99.99 mol-%, more preferably 80 to 99.95 mol-%, even more preferably 90 to 99.9 mol-% and particularly preferred 94 to 99.5 mol-% of -CH₂O- recurring units. Preferably, the polyoxymethylene copolymer (cPOM) comprises 0.01 to 40 mol-%, more preferably 0.05 to 20 mol-%, even more preferably 0.1 to 10 mol-%, and particularly preferred 0.5 to 6 mol-% of recurring units according to formula (I), wherein the mol-% in each case are based on the total number of mols of recurring units comprised in the polyoxymethylene copolymer (cPOM).

Therefore, another object of the present invention is a method, wherein the polyoxymethylene copolymer (cPOM) comprises from 60 to 99.99 mol% of -CH₂O-recurring units and from 0.01 to 40 mol% of recurring units according to formula (I) 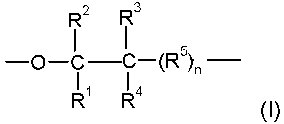 where R¹ to R⁴ are each, independently of one another, a hydrogen atom, a C₁-C₄-alkyl group or a alkoxy-substituted alkyl group having from 1 to 4 carbon atoms and R⁵ is a chemical bond, a -CH₂-, -OCH₂-, a C₁-C₄-alkyl- or C₁-C₄-alkoxy-substituted methylene group or a corresponding oxymethylene group and n is from 0 to 3.

The -CH₂O- recurring units are generally introduced into the polyoxymethylene copolymer (cPOM) by a polymerization of at least one main monomer selected from the group of cyclic formals (cyclic oligomers of formaldehyde), wherein 1,3,5-trioxane is particularly preferred.

The recurring units according to formula (I) can advantageously be introduced into the polyoxymethylene copolymer (cPOM) by ring-opening polymerization of at least one first comonomer selected from the group of those of the formula (II) 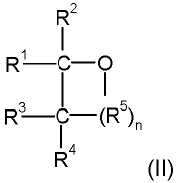 where R¹ to R⁵ and n are as defined above for formula (I).

Preferably, the at least one first comonomer is selected from the group consisting of ethylene oxide, 1,2-propylene oxide, 1,2-butylene oxide, 1,3-butylene oxide, 1,3-dioxane, 1,3-dioxolane and 1,3-dioxepane, wherein 1,3-dioxolane is particularly preferred.

Optionally, the polyoxymethylene copolymer (cPOM) can comprise recurring units derived from at least one second comonomer. The second comonomer is preferably selected from the group consisting of cyclic ethers of the formula (III), or of acetals of the formula (IV) 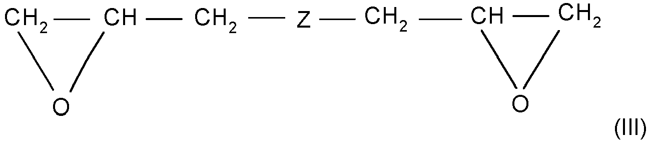 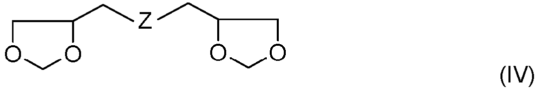 where Z is a chemical bond, -O-, -ORO- (R is C₁-C₈-alkylene or C₃-C₃-cycloalkylene), linear oligoformals and polyformals. Preferred second comonomers are selected from the group consisting of ethylene diglycide, diglycidyl ether and diethers derived from glycidyls and formaldehyde, dioxane or trioxane in a molar ratio of 2:1 and also diethers derived from 2 mol of a glycidyl compound and 1 mol of an aliphatic diol having from 2 to 8 carbon atoms, for example the diglycidyl ethers of ethylene glycol, 1,4-butanediol, 1,3-butanediol, cyclobutane-1,3-diol, 1,2-propanediol, 1,3-propanediol, cyclohexane-1,4-diol.

If at least one second monomer is used, the at least one second monomer is preferably used in such amounts that the recurring units derived therefrom are comprised in the polyoxymethylene copolymer (cPOM) in amounts of 0.001 to 5%, preferably from 0.01 to 2%, wherein the mol-% in each case are based on the total number of mols of recurring units comprised in the polyoxymethylene copolymer (cPOM).

The molecular weight of the cPOM can be adapted to the needed melt viscosity of the resulting product by the use of at least one chain transfer agent (CTA). As CTA, linear oligoformals like dimethoxymethane, diethoxymethane or dibutoxymethane can be used. Dimethoxymethane (CH₃OCH₂OCH₃) is the preferred CTA.

The melting point of the polyoxymethylene copolymer (cPOM) comprised in the first mixture (M1) is preferably in the range of from 150 to 200°C, more preferably the melting point is in the range of from 160 to 180°C. The melting point of the cPOM is determined with a heating and cooling rate of 20 K/Min according to DIN EN ISO 11357-3 (year 2013-04) and a sample weight of about 8.5 mg.

The molecular weight of the polyoxymethylene copolymer (cPOM) comprised in the first mixture (M1) (weight-average Mw; determined as described below) can be adjusted within a wide range. The molecular weight M_{w} is preferably in the range of from 10 000 to 240 000 g/mol ± 10%, while the number-average molecular weight Mₙ (determined as described below) is preferably in the range of from 8000 to 85 000 g/mol. Preferably, the polyoxymethylene copolymer (cPOM) comprised in the first mixture (M1) has a molecular weight (Mw) in the range of from 80 000 to 220 000 g/mol ± 10%, while its molecular weight (Mₙ) is preferably in the range of from 9 000 to 38000 g/mol. The Mw/Mn ratio (Polydispersity Index) of the polyoxymethylene copolymer (cPOM) comprised in the first mixture (M1) is preferably in the range of from 1.4 to 14, the Mw/Mn is more preferably in the range of from 2.1 to 14.

The molecular weight of the polymers and the cPOM was determined via size-exclusion chromatography in a SEC apparatus (size exclusion chromatography). This SEC apparatus was composed of the following combination of separating columns: a preliminary column of length 5 cm and diameter 8 mm, a second linear column of length 30 cm and diameter 7.5 mm. The separating material in both columns was PL-HFIP gel from Polymer Laboratories. The detector used comprised a differential refractometer from Agilent 1100. A mixture composed of hexafluoroisopropanol with 0.05% of potassium trifluoroacetate was used as eluent. The flow rate was 1 ml/min, the column temperature being 35°C. 60 microliters of a solution at a concentration of 1.5 g of specimen per liter of eluent were injected. This specimen solution had been filtered in advance through Millipore Millex FG (pore width 0.2 micrometers). Narrowly distributed PMMA standards from PSS (Polymer Standards Service GmbH, Mainz, DE) with molecular weight M from 800 to 2.220.000 g/mol were used for calibration.

Polydispersity index is defined as the weight average molecular weight divided by the number average molecular weight.

The molecular weight distribution of the polyoxymethylene copolymer (cPOM) comprised in the first mixture (M1) may be monomodal or essentially monomodal. It may also have a multimodal molecular weight distribution. It may be possible that cPOM has a bimodal molecular weight distribution.

In step a), the first mixture (M1) is provided which comprises the polyoxymethylene copolymer (cPOM) and the acid catalyst. The term "acid catalyst" in the present invention is understood to mean exactly one acid catalyst and also mixtures of two or more acid catalysts. Preferably, the first mixture (M1) comprises one acid catalyst. The term "acid catalyst" in the present invention, moreover, is understood to comprise the acid catalyst itself as well as catalytic active transformation products of the acid catalyst.

The acid catalyst may preferably be at least one, e.g. two, more preferred one halide of boron, tin, titanium, phosphorous, antimony or arsenic. Thereby it may be preferred that the halide is a chloride or fluoride or that the halide contains both. Examples thereof are boron trifluoride, tin tetrachloride, titanium tetrachloride, phosphorus pentafluoride, phosphorous pentachloride, antimony pentafluoride and arsenic pentafluoride, and especially also their complex compounds.

The acid catalyst may preferably be at least one halide of boron, in particular boron trifluoride, e.g. boron trifluoro hydrate, or at least one, more preferred one coordination compound of boron halide and at least one, more preferred one organic compound comprising at least one oxygen atom. Said organic compound to form a coordination compound of boron halide may for instance be an alcohol or ether.

Preferably, the acid catalyst is selected from the group consisting of boron halide in coordination with an ether, in particular an alkyl ether, such as a C1 to C4 alkyl ether, may be most preferred. The coordination compound of boron trifluoride with an ether, in particular a dialkyl ether, such as a C1 to C4 dialkyl ether, may be most preferred, in particular inter alia, boron trifluoride dibutyl etherate, boron trifluoride diethyl etherate or boron trifluoride dimethyl etherate or a mixture thereof. Boron trifluoride diethyl etherate may most preferably be used.

Another object of the present invention, therefore, is a method, wherein the acid catalyst is at least one acid catalyst selected from the group consisting of boron trifluoride, a coordination complex of boron trifluoride with water, a coordination complex of boron trifluoride with a dialkyl ether and catalytic active transformation product of the aforementioned acid catalysts.

In a particularly preferred embodiment, the first mixture (M1) comprises boron trifluoride diethyl etherate and catalytic active transformation product of the boron trifluoride diethyl etherate as an acid catalyst.

The amount of the acid catalyst in the first mixture (M1) is not specifically limited. Typically, the amount of the acid catalyst in the first mixture (M1) is from 10 to 150 ppm, preferably from 20 to 140 ppm, more preferably from 30 to 130 ppm, and in particular preferred from 40 to 100 ppm, in each case based on the total weight of the main monomers and comonomers, preferably based on the total weight of the first mixture (M1). Lower amounts may lead to slower reaction initiation, and higher amounts usually do not lead to a faster reaction.

Another object of the present invention, therefore, is a method, wherein the acid catalyst in step a) is present in an amount of from 10 to 150 ppm based on the total weight of the first mixture (M1).

In a preferred embodiment, the provision of the first mixture (M1) in step a) comprises step a1), namely, the polymerization of at least one main monomer selected from the group of cyclic formals, preferably 1,3,5-trioxane, and at least one first comonomer selected from the group of those of formula (II) and, optionally, at least one second comonomer in presence of the acid catalyst.

Another object of the present invention, therefore, is a method, wherein step a) comprises the step:
a1) polymerization of at least one main monomer selected from the group of cyclic formals, and at least one first comonomer selected from the group of those of the formula (II) 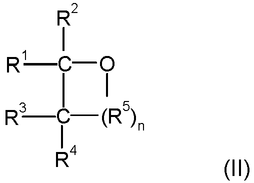 where R¹ to R⁵ and n are as defined in formula (I), and optionally at least one second comonomer, in the presence of the acid catalyst, in order to provide the first mixture (M1) comprising the polyoxymethylene copolymer (cPOM) and the acid catalyst.

In step a1), the acid catalyst is preferably present in an amount of from 10 to 150 ppm based on the total weight of main monomers and the comonomers.

Therefore, another object of the present invention is a method, wherein the acid catalyst in step a1) is present in an amount of from 10 to 150 ppm based on the total weight of main monomers and the comonomers.

Generally, the polymerization in step a1) can be carried out using diverse methods. Such methods are known to the person skilled in the art or are accessible to him by application of his general knowledge. It is preferred that the first mixture (M1) is produced via cationic polymerization. During cationic polymerization, cPOM can be formed in bulk (i.e. without or essentially without solvent).

The polymerization may be carried out at temperatures, pressures and in equipment generally known to the person skilled in the art or accessible to him by application of his general knowledge. For instance, it may be performed in an extruder or a cascade of two or more extruders such as of twin-screw type, such as of the self-cleaning type. It may also be possible to carry out the process disclosed herein in a kneader or a cascade of two or more kneaders, such as of the self-cleaning type. Generally, it may be advantageous to carry out the polymerization at temperatures as low as possible in order to avoid waste of energy and at temperatures high enough to sustain the polymerization and to ensure good blending, in particular by way of sustaining the at least one monomer and, if present, also the at least one comonomer in the liquid state. Thus, it may be preferred to carry out the polymerization at a temperature of from 50 to 150 °C, whereby temperatures of from 60 to 120°C may be more preferred. Thereby the temperatures refer to the temperature in the bulk.

In one embodiment, the first mixture (M1) can further comprise unreacted residual monomers in amounts from 2 to 30% by weight. The unreacted residual monomers are typically selected from the above-mentioned main monomers, the comonomers and formaldehyde.

In a preferred embodiment, the first mixture (M1) comprises
70 to 98% by weight of polyoxymethylene copolymer (cPOM),
2 to 30% by weight of unreacted residual monomers, and
10 to 150 ppm acid catalyst,
based on the total weight of the first mixture (M1).

### Step b)

According to step b),
(A) triisopropanolamine and/or
(B) sodium carbonate and/or sodium hydrogen carbonate
   are added to the first mixture (M1) in order to deactivate the acid catalyst and in order to obtain a second mixture (M2) comprising
   the polyoxymethylene copolymer (cPOM) and
   a complex of the acid catalyst with component (A) and/or
   a reaction product of the acid catalyst with component (B).

In a preferred embodiment, according to step b),
(A) triisopropanolamine and
(B) sodium carbonate and/or sodium hydrogen carbonate

are added to the first mixture (M1) in order to deactivate the acid catalyst and in order to obtain a second mixture (M2) comprising
the polyoxymethylene copolymer (cPOM) and
a complex of the acid catalyst with component (A) and
a reaction product of the acid catalyst with component (B).

In the present invention, the terms "component (A)" and "triisopropanolamine" are used interchangeably and, therefore, have the same meaning. The same applies for "component (B)" and "sodium carbonate and/or sodium hydrogen carbonate". These terms also have the same meaning and are used interchangeably as well.

Triisopropanolamine (tris(2-hydroxypropyl)amine; TIPOA; component (A)) has the CAS-number 122-20-3. Its molar mass is 191.27 g/mol, its melting point is 45°C and its boiling point is 301°C. Triisopropanolamine is water-soluble.

Sodium carbonate (Na₂CO₃; component (B)) has the CAS-number 497-19-8. Its molar mass is 105.99 g/mol and its melting point is 851°C. Sodium carbonate is water-soluble.

Sodium hydrogen carbonate (NaHCO₃; component (B)) has the CAS-number 144-55-8. Its molar mass is 84.01 g/mol. Sodium hydrogen carbonate is water-soluble as well.

In step b), component (A) and component (B) can be added simultaneously.

Another object of the present invention, therefore, is a method, wherein in step b) component (A) and component (B) are added simultaneously.

However, it is also possible that in step b) component (A) is added prior to component (B).

Another object of the present invention, therefore, is a method, wherein in step b) component (A) is added prior to component (B).

Another object of the present invention is a method, wherein in step b) component (A) is added prior to component (B) and component (B) is added simultaneously with at least one additive.

In this case, it is clear for a skilled person that, after step b), the second mixture (M2) only comprises
the polyoxymethylene copolymer (cPOM) and
a complex of the acid catalyst with component (A),
and that only after step c), the second mixture (M2) also comprises
a reaction product of the acid catalyst with component (B).

In step b), the triisopropanolamine (component (A)) can be added in pure form, in form of a slurry or in form of a solution that comprises the triisopropanolamine and a solvent. The solvent can be an organic solvent or water.

In one embodiment, the triisopropanolamine in step b) is added to the first mixture (M1) in form of a solution that comprises the triisopropanolamine and an organic solvent. Suitable organic solvents are for example cyclohexane, methanol, ethanol, acetone, methylethylketone, ethyl acetate or benzene, wherein benzene and ethyl acetate are preferred. Ethyl acetate is most preferred.

If the triisopropanolamine is added in form of a solution, the concentration of the triisopropanolamine is typically in the range of 1 to 50 % by weight, preferably in the range of 2 to 40 % by weight, more preferably in the range of 2 to 30 % by weight, and particularly preferred in the range of 3 to 10 % by weight, based on the total weight of the solution which comprises the triisopropanolamine and the organic solvent.

In another embodiment, the triisopropanolamine in step b) is added to the first mixture (M1) in form of a solution that comprises the triisopropanolamine and water.

However, ethyl acetate may be the most preferred solvent.

Moreover, in step b), in another embodiment, the triisopropanolamine may be added in a mixture with at least one other deactivation agent selected from the group consisting of ammonia, triethylamine, tri-n-butylamine and triethanolamine. However, in a preferred embodiment, in step b) triisopropanolamine is the only deactivation agent added.

In step b), preferably the triisopropanolamine is added in a molar excess in view of the acid catalyst contained in the first mixture (M1) from 25:1 to 1:1, more preferably from 10:1 to 1.1:1 and particularly preferred from 5:1 to 1.2:1.

In step b), component (B) can be added in pure form, in form of a slurry or in form of a solution that comprises component (B) and a solvent, preferably water.

If added as slurry or in pure (solid) form, the average particle size D50 of component (B) should be < 100 µm (D10: 20 µm; D90: 250 µm) and preferred < 50 µm (D10: 12 µm; D90: 200 µm) in order to achieve an effect in the same order as in solution. A too coarse powder does not react completely with the acidic components of the polymer melt and can even cause brownish dots in the product.

In the context of the present invention, the "D10" is to be understood as meaning the particle size at which 10% by volume of the particles based on the total volume of the particles are smaller than or equal to the D10 and 90% by volume of the particles based on the total volume of the particles are larger than the D10. By analogy, the "D50" is to be understood as meaning the particle size at which 50% by volume of the particles based on the total volume of the particles are smaller than or equal to the D50 and 50% by volume of the particles based on the total volume of the particles are larger than the D50. Correspondingly, the "D90" is to be understood as meaning the particle size at which 90% by volume of the particles based on the total volume of the particles are smaller than or equal to the D90 and 10% by volume of the particles based on the total volume of the particles are larger than the D90.

To determine the particle sizes, component (B) is suspended in a dry state by means of compressed air or in a solvent, for example water or ethanol, and this suspension is analyzed. The D10, D50 and D90 are determined by means of laser diffraction using a Malvern Mastersizer 3000. Evaluation is by means of Fraunhofer diffraction.

In a preferred embodiment, component (B) in step b) is added to the first mixture (M1) in form of a solution that comprises component (B) and water.

In a particularly preferred embodiment, in step b) component (A) is added in form of a solution (S_{A}) comprising the component (A) dissolved in at least one solvent (C_{A}) and component (B) is added in form of a solution (S_{B}) comprising the component (B) dissolved in at least one solvent (C_{B}).

Another object of the present invention is, therefore, a method, wherein in step b) component (A) is added in form of a solution (S_{A}) comprising the component (A) dissolved in at least one solvent (C_{A}) and component (B) is added in form of a solution (S_{B}) comprising the component (B) dissolved in at least one solvent (C_{B}).

In this case, the solution (S_{A}) preferably comprises ethyl acetate and/or water as a solvent (C_{A}), and/or the solution (S_{B}) preferably comprises water as a solvent (C_{B}).

Another object of the present invention is, therefore, a method, wherein
i) the solution (S_{A}) comprises ethyl acetate and/or water as a solvent (C_{A}), and/or
ii) the solution (S_{B}) comprises water as a solvent (C_{B}).

In a most particularly preferred embodiment, in step b) component (A) is added in form of a solution (S_{A}) comprising the component (A) dissolved in at least one solvent (C_{A}) at the beginning of step b) and component (B) is added in form of a solid at the end of step b) by mixing the first mixture (M1) and component (B) in the solid phase, before progressing to step c).

Preferably, in step b), additionally to component (A),
i) only sodium carbonate is added to the first mixture (M1) in a concentration in the range from 30 to 120 ppm and preferably 60 to 70 ppm based on the total weight of the first mixture (M1), or
ii) only sodium hydrogen carbonate is added to the first mixture (M1) in a concentration in the range from 100 to 300 ppm and preferably 150 to 200 ppm based on the total weight of the first mixture (M1), or
iii) sodium carbonate is added in a concentration in the range from 30 to 60 ppm based on the total weight of the first mixture (M1) and sodium hydrogen carbonate is added in a concentration in the range from 30 to 200 ppm based on the total weight of the first mixture (M1) to the first mixture (M1).

Another object of the present invention is, therefore, a method, wherein in step b), additionally to component (A),
i) only sodium carbonate is added to the first mixture (M1) in a concentration in the range from 30 to 120 ppm based on the total weight of the first mixture (M1), or
ii) only sodium hydrogen carbonate is added to the first mixture (M1) in a concentration in the range from 100 to 300 ppm based on the total weight of the first mixture (M1), or
iii) sodium carbonate is added in a concentration in the range from 30 to 60 ppm based on the total weight of the first mixture (M1) and sodium hydrogen carbonate is added in a concentration in the range from 30 to 200 ppm based on the total weight of the first mixture (M1) to the first mixture (M1).

Preferred combinations are 30 ppm sodium carbonate with 75 to 85 ppm sodium hydrogencarbonate, 40 ppm sodium carbonate with 65 to 75 ppm sodium hydrogencarbonate and 60 ppm sodium carbonate with 60 to 70 ppm sodium hydrogencarbonate

In step b), a second mixture (M2) is obtained, comprising the polyoxymethylene copolymer (cPOM) and a complex of the acid catalyst with component (A) and/or a reaction product of the acid catalyst with component (B), preferably comprising the polyoxymethylene copolymer (cPOM) and a complex of the acid catalyst with component (A) and a reaction product of the acid catalyst with component (B).

### Step c)

In step c), optionally at least one additive is added to the second mixture (M2). Step c) can be carried out after step b). However, it can also be carried out simultaneously with step b).

As described above, it is also possible that in step b) component (A) is added prior to component (B) and component (B) is added simultaneously with at least one additive.

The at least one additive can be added in any known device. The additives are preferably added in a mixing device.

The at least one additive is preferably selected from the group consisting of antioxidants, formaldehyde scavengers, UV absorbents, mold-release agents, acid scavengers and nucleation agents.

Suitable antioxidants are, for example, sterically hindered phenols, such as triethylene glycol bis(3-tert-butyl-4-hydroxy-5-methylphenyl)propionate, for example, Irganox 245 of BASF SE. In case an antioxidant is used, it is added in such an amount that the polyoxymethylene copolymer (cPOM) comprises from 0.001 to 10 % by weight, preferably from 0.05 to 2% by weight, more preferred from 0.2 to 0.5% by weight antioxidant(s) based on the total weight of the polyoxymethylene copolymer (cPOM).

Suitable formaldehyde scavengers are, for example amines, amino-triazine compounds, benzoguanamine, amino-acids, hydrazides, urea or urea derivatives, allantoin, guanamines, hydantoin, (modified) melamines or condensates of melamine and formaldehyde and polyamides, or mixtures thereof. In case a formaldehyde scavenger is used, it is added in such an amount that the polyoxymethylene copolymer (cPOM) comprises from 0.001 to 10 % by weight, preferred from 0.05 to 2% by weight, more preferred from 0.1 to 0.5% by weight formaldehyde scavenger(s) based on the total weight of the polyoxymethylene copolymer (cPOM).

Suitable polyamides are, for example, copolyamides based on caprolactam, hexamethylenediamine, bis(4-aminocyclohexyl)methane and adipic acid, which can further comprise monofunctional polymerizing compounds such as propionic acid or triacetonediamine as components to regulate the molar mass. Examples are Ultramid^{®} 1C and Ultramid^{®} C31 from BASF SE. In case a polyamide is used, it is added in such an amount that the polyoxymethylene copolymer (cPOM) comprises from 0.001 to 2% by weight, preferably from 0.05 to 1.5% by weight, more preferably from 0.1 to 0.5% by weight of polyamide(s) based on the total weight of the polyoxymethylene copolymer (cPOM).

Suitable UV absorbents are for example hindered amines light stabilizer such as a hindered amine of the polymeric structure 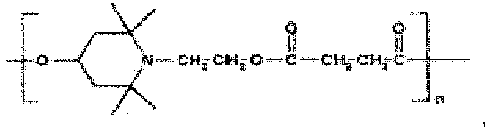 wherein n is an integer in the range of 5 to 50. In case a hindered amine is used, it is added in such an amount that the polyoxymethylene copolymer (cPOM) comprises from 0.001 to 10 % by weight, preferred from 0.01 to 1% by weight, more preferred it may be of from 0.05 to 0.5% by weight of hindered amine(s) based on the total weight of the polyoxymethylene copolymer (cPOM).

Suitable mold-release agents are for example esters or amides of saturated or unsaturated aliphatic carboxylic acids having from 10 to 40 carbon atoms, preferably from 16 to 22 carbon atoms, with polyols or aliphatic saturated alcohols or amines having from 2 to 40 carbon atoms, preferably from 2 to 6 carbon atoms. In case an ester or amide is used, it is added in such an amount that the polyoxymethylene copolymer (cPOM) comprises from 0.01 to 5% by weight, preferably from 0.09 to 1% by weight and in particular from 0.1 to 0.5% by weight mold-release agents, based on the total weight of the polyoxymethylene copolymer (cPOM). Preferred esters or amides are accordingly glyceryl distearate, glyceryl tristearate, ethylenediamine distearate, glyceryl monopalmitate, glyceryl trilaurate, glyceryl monobehenate and pentaerythrityl tetrastearate.

Suitable acid scavengers beyond sodium carbonate and sodium hydrogencarbonate are, for example, earth alkaline carbonates, hydroxides, (hydroxy)stearates or silicates. In case an acid scavenger is used, it is added in such an amount that the polyoxymethylene copolymer (cPOM) comprises from 0.001 to 2% by weight, preferably from 0.01 to 1% by weight, and particularly from 0.02 to 0.1% by weight acid scavengers, based on the total weight of the polyoxymethylene copolymer (cPOM).

Suitable nucleation agents are, for example, melamine cyanurate, melamine formaldehyde condensate, silica acid, branched polyoxymethylene and talcum. In case a nucleation agent is used, it is added in such an amount that that the polyoxymethylene copolymer (cPOM) comprises from 0.005 to 5% by weight, preferably from 0.01 to 1% by weight, and particularly from 0.02 to 0.2% by weight nucleation agents, based on the total weight of the polyoxymethylene copolymer (cPOM).

If present, the additives are added in a customary manner, for example individually or together, in pure form, as a solution or suspension or as a masterbatch.

### Step d)

In a preferred embodiment, the second mixture (M2) comprises, as described above, 2 to 30% by weight of unreacted residual monomers and 40 to 150 ppm of the complex of the catalyst and the triisopropanolamine and of the reaction product of the catalyst with component (B).

The polyoxymethylene copolymer, moreover, may comprise unstable end groups.

In a preferred embodiment, therefore, the second mixture (M2) is thermally treated in order to remove the residual monomers and to depolymerize the unstable end groups in step d) in order to obtain a third mixture (M3).

In step d), the second mixture (M2) is treated at a temperature in the range from 180 to 280 °C, preferably in the range from 180 to 260 °C, under vacuum to obtain a third mixture (M3).

The removal of the residual monomers and the unstable end groups is usually done in the melt using a kneading and a degassing device. This finishing process is generally known to a person skilled in the art.

For the polyoxymethylene copolymer (cPOM) and the further optionally contained components like, for example, the unreacted residual monomers, the aforementioned descriptions and preferences apply analogously.

Another object of the present invention is the use of
(A) triisopropanolamine and
(B) sodium carbonate and/or sodium hydrogen carbonate
for the deactivation of an acid catalyst during the production of a polyoxymethylene copolymer (cPOM).

Preferably, components (A) and (B) are used after the polymerization step in the production of polyoxymethylene copolymers (cPOM).

Another object of the present invention is a method for the production of a polymer molding composition (PM) comprising the steps:
a1) polymerization of at least one main monomer selected form the group of cyclic formals, and at least one first comonomer selected from the group of those of the formula (II) 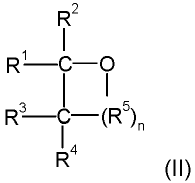 where R¹ to R⁵ and n are as defined above in claim 2, and optionally at least one second comonomer, in the presence of the acid catalyst, in order to provide the first mixture (M1) comprising the polyoxymethylene copolymer (cPOM) and the acid catalyst,
b) adding
   (C) triisopropanolamine and
   (D) sodium carbonate and/or sodium hydrogen carbonate

   to the first mixture (M1) to deactivate the acid catalyst in order to obtain a second mixture (M2) comprising
   the polyoxymethylene copolymer (cPOM) and
   a complex of the acid catalyst with component (A) and
   a reaction product of the acid catalyst with component (B),
c) optionally adding at least one additive to the second mixture (M2),
d) treating the second mixture (M2) at a temperature in the range from 180 to 280 °C, preferably in the range from 180 to 260°C, under vacuum to obtain a third mixture (M3).

For steps a1) and b), c) and d) of the method for the production of the polymer molding composition (PM) the aforementioned descriptions and preferences in view of the method for the deactivation of an acid catalyst during the production process of a polyoxymethylene copolymer (cPOM) apply analogously.

Another object of the present invention is a polymer molding composition (PM) obtained by the above-mentioned method.

The polymer molding composition (PM) obtained by the method for the production of a polymer molding composition (PM) preferably comprises

| | |
|---|---|
| 60 to 99.99% | by weight of a polyoxymethylene copolymer (cPOM), |
| 100 to 500 ppm | of the complex of the acid catalyst with component (A) and/or the reaction product of the acid catalyst with component (B) and optionally |
| 0 to 39.99% | by weight of at least one additive selected from the group consisting of antioxidants, formaldehyde scavengers, UV-absorbents, mold-release agents, acid scavengers and nucleation agents. |

Another object of the present invention is the use of the polymer molding composition (PM) for the production of molded parts.

The present invention is described in more detail by the examples hereinafter without being restricted thereto.

### Examples

### Laboratory scale examples:

- ***Inventive examples 11 to 127 and comparative examples C28 and C29***
- ***Inventive examples 131 to 162 and comparative example C30***

### a) Materials

The following components are used:
(1) Raw cPOM (corresponds to the first mixture (M1))
The raw cPOM is prepared in a fume hood in a stainless-steel beaker, equipped with a magnetic stirrer and a thermocouple, wherein the stainless-steel beaker is located in a solid aluminium block and tempered to 80°C. 300 g (96.5% by weight based on the total amount of the used monomers) of 1,3,5-trioxane are melted in a closed aluminium container at about 85°C and transferred to the beaker. In parallel, 10.88 g 1,3-dioxolane (3.5% by weight based on the total amount of the used monomers) are diluted with 2.798 g ethyl acetate at room temperature (RT) and 0.0252 g boron trifluoride diethyl etherate (81 ppm based on the total amount of the used monomers) are added. The mixture is injected under stirring to the 1,3,5-trioxane, which is tempered to 81°C. After a few seconds, a white turbidity appears, and, a few seconds later the content solidifies to a white raw cPOM block with an increase in temperature. After about 15 minutes, the obtained raw cPOM block is removed from the beaker. After cooling down, the raw cPOM block is smashed with a hammer and ground into small pieces in a Vorwerk Thermomix machine.
(2) Used components for the deactivation:

| | |
|---|---|
| Component (A): | Triisopropanolamine (85% in water): BASF SE |
| Component (B-1): | Sodium carbonate (Na₂CO₃, 497-19-8): Honeywell Fluka |
| Component (B-2): | Sodium hydrogen carbonate (NaHCO₃, 144-55-8): Sigma-Aldrich |
| For comparison: | Calcium hydroxide (Ca(OH)₂) (1305-62-0): Sigma-Aldrich |

(3) Additives:
Ethylenebis(oxyethylene)bis-(3-(5-tert-butyl-4-hydroxy-m-tolyl)-propionate) (36443-68-2): Irganox 245 FF by BASF SE
Synthetic magnesium silicate (1343-88-0): Ambosol 500 (PQ Corporation)
Talc (14807-96-6): Hydrous magnesium silicate: IT Extra (Mondo)
EBS/ N,N'-Ethylenedi(stearamide) (110-30-5): Acrawax C (Lonza)
Polyethylene glycol: Pluriol E8000

(4) Further components:
Diglyme (Bis(2-methoxyethyl) ether)

### b) Deactivation of the catalyst and production of polymer molding compositions (PM)

### • Inventive examples I1 to I27 and comparative examples C28 and C29

### Step a)

The raw cPOM powder is placed in an 1 litre HWS vessel with a Teflon blade stirrer. The HWS vessel is evacuated three times and ventilated with nitrogen to remove oxygen and moisture.

### Step b)

### Adding component (A)

0.12 g triisopropanolamine (85% in water) and 15 µL water are added to 12 mL Diglyme and the resulting solution is sprayed onto the raw cPOM powder with a nebulizer. The raw cPOM is then heated to 60°C with a preheated oil bath while stirring vigorously and stirred for one hour under a nitrogen stream. Then, it is cooled under nitrogen.

### Adding component (B), or Ca(OH)₂ (for comparison), respectively

25 g of the raw cPOM powder treated with component (A) are placed in a 250 mL flask with a Teflon blade stirrer. According to the required amounts of component (B) indicated in tables 1, 2 and 3, the corresponding amount of a 5 wt.-% aqueous solution/slurry of component (B) (Na₂CO₃ and/or NaHCO₃) or of Ca(OH)₂) is made up to 1 mL with Diglyme and sprayed onto the cPOM powder with a nebulizer. The cPOM is then heated to 60°C with a preheated oil bath and stirred for one hour under a nitrogen stream. Then, it is cooled to a temperature of 50°C under nitrogen, wherein the second mixture (M2) is obtained.

### Step c)

### Adding of additives

An additive mixture comprising 3 parts by weight Irganox 245 FF, 0.5 parts by weight synthetic magnesium silicate, 0.4 parts by weight talc, 1.5 parts by weight EBS and 2 parts by weight Pluriol E8000 (based on the total weight of the additive mixture) is grinded in a lab mill to obtain a fine and homogeneous powder, which has to be added in an amount of 0.74% with respect to the second mixture (M2). To achieve this, 29.6 wt% (7.4 g) of the powder mix is filled up with diglyme to a volume of 40 mL and thoroughly shaken. 1 mL of the resulting additive solution/slurry was sprayed on the mixture (M2) and then stirred for 30 minutes at 50°C under nitrogen.

In steps b) and c), Diglyme is used as carrier medium to ensure a uniform and complete addition of components.

### Step d)

### Fusing of the second mixture (M2)

The second mixture (M2) treated with the additive solution is filled in a 250 mL HWS vessel whose lower part is rubbed with Teflon paste to form a very thin film for avoiding adhesion to the glass. The vessel is placed under vacuum (approximately 100 mbar) and nitrogen, and immersed in an oil bath preheated to 210°C. After 10 to15 minutes, the second mixture (M2) treated with the additive solution is completely molten and the gas formation is finished (practically no more bubble formation; third mixture (M3)). After the vessel has cooled down, the POM detaches from the glass wall as a calotte.

### • Inventive examples I31 to I62 and comparative example C30

### Step a)

25 g raw cPOM powder per example are placed in a flask.

### Step b)

### Adding components (A) and (B)

A 7.51wt.-% solution of triisopropanolamine in ethyl acetate (component (A)) and one of the 5 wt.-% aqueous solution/slurry of component (B) (Na₂CO₃ or NaHCO₃) are added according to the method given in table 4 and heated to 60°C in the given time with stirring and in a stream of nitrogen to obtain a second mixture (M2).

### Step c)

### Adding of additives

185 mg of an additive mixture comprising 0.3 wt.-% Irganox 245 FF, 0.05 wt.-% synthetic magnesium silicate, 0.04 wt.-% talc, 0.15 wt.-% EBS and 0.2 wt.-% Pluriol E8000 (based on the total weight of the second mixture (M2)) are added to the second mixture (M2) under stirring at the given time.

### Step d)

### Fusing of the second mixture (M2)

The second mixture (M2) treated with the additive mixture is filled in a 250 mL HWS vessel whose lower part is rubbed with Teflon paste to form a very thin film for avoiding adhesion to the glass. The vessel is placed under vacuum (approximately 100 mbar) and nitrogen, and immersed in an oil bath preheated to 210°C. After 15 minutes, the second mixture (M2) treated with the additive mixture is completely molten and the gas formation is finished (practically no more bubble formation; third mixture (M3)). After the vessel has cooled down, the POM detaches from the glass wall as a calotte.

### c) Analytical methods

For the determination of the weight loss at 222°C and the extractable Formaldehyde (FA) content, the calottes obtained above are ground and the resulting powder is degassed for five hours at 140°C.

**Weight loss** N₂ (determination of the weight loss under nitrogen atmosphere):
For testing the heat stability, the weight loss at 222°C under a slow N₂ stream is determined. It is the weight loss in percent of a weighed sample of about 1 g of powder on heating for 2 h at 222°C under nitrogen. After cooling, the sample is weighed again, and the weight loss is calculated.

### Extractable Formaldehyde (FA) content:

The extractable FA content is determined as follows. 5 g POM-powder with a particle size < 0.5 mm and 10 g deionized water are filled into a 250 mL roundbottom flask equipped with a reflux condenser and elliptical magnet bar. An aluminum block fitting to the round shape of the flask on top of a magnet stirring/heating plate is heated to 120°C. The flask is lowered onto the aluminum block, the stirring started, and the beginning of boiling watched for taking the starting time. This procedure is continued under slow reflux for 50 or 100 min respectively. After rapid cooling and settling of the powder the water phase is sucked through a syringe filter and given to formaldehyde determination via the photometric acetylacetone method described by Kakac and Vejdelek, Handbuch der photometrischen Analyse organischer Verbindungen, Verlag Chemie, Weinheim (1974): Formaldehyde is reacted with two equivalents of acetylacetone and one equivalent of ammonia to give 3,5-diacetyl-1,4-dihydrolutidin, which in turn is determined photometrically at 412 nm wavelength with a baseline correction at 495 nm.

### Color of pellets:

### b*

The color values are determined on the even and hemispherical lower surface of the calotte. The b* value is given which reflects the blue-yellow axis. Negative values indicate a bluish tint and positive values a yellow to brownish tint. Preferred is a bluish to neutral tint.

### Yellowness Index, YI

The Yellowness Index (YI) is determined according to DIN 6167. Both, color and yellowness index are determined with a Konica Minolta Spectrophotometer CM-3600d, and the data are processed with the respective Color Data Software CM-S 100w Spectra Magic NX. Preferred YI values are in the range of -2 to 2.

### Drinking water test (migration test)

The test is done according to the procedure described in DIN EN 12873-1 and-2. First, 2 mm thick platelets are pressed at 190°C and are, strung on a wire, completely immersed in deionized water, and stored in a screw-top jar at exactly 85°C. After exactly one day, the water is removed, the platelets are rinsed with tab water for 1 hour and again extracted with fresh deionized water. The extract water of defined days is determined for formaldehyde and the FA content in ppm is normalized to 100 cm² area and 100 mL water. A decay curve is obtained, which runs towards zero in the case of the inventive examples and remains at an unacceptably high value in the comparative examples. The results are shown in tables 5 and 6.

The extrusion tests (Table 5) are carried out on a twin-shaft Xplore^{®} MC 15 micro-compounder from Xplore Instruments BV, loaded with 19 g powder. The melt is kneaded at 190°C and 100 rpm for 5 and 10 min, respectively, and then discharged as a strand, which is granulated for the thermal test (weight loss). Part of the melt is collected on a Teflon pad and then pressed into a platelet for color measurement.

### d) Results

### • Inventive examples I1 to I27 and comparative examples C28 and C29

**Table 1**

| **Examples** | **c (Na₂CO₃) [ppm; based on the total weight of the first mixture (M1)]** | **Extractable FA content (50 min, boiling water) [ppm]** | **Extractable FA content (100 min, boiling water) [ppm]** | **Weight loss under N₂ (222°C, 2h) [%]** | **b* (blue-yellow axis)** | **Yellowness Index, YI** |
|---|---|---|---|---|---|---|
| **I1** | 10 | 210 | 250 | 1.58 | -2.51 | -6.79 |
| **I2** | 20 | 150 | 220 | 1.34 | -2.49 | -6.55 |
| **I3** | 30 | 96 | 112 | 0.89 | -0.66 | -2.24 |
| **I3a** | 30 | 46 | 74 | | -0.60 | -2.12 |
| **I4** | 35 | 36 | | | -0.02 | -0.85 |
| **I4a** | 35 | 50 | 88 | 0.3 | | |
| **I5** | 40 | 31 | | | 0.31 | -0.12 |
| **I5a** | 40 | 38 | 50 | 0.3 | | |
| **I6** | 45 | 120 | 170 | 0.63 | -0.64 | -2.15 |
| **I6a** | 45 | 38 | 50 | 0.3 | 1.78 | 3.09 |
| **I7** | 50 | 70 | 60 | 0.24 | -1.12 | -3.37 |
| **I7a** | 50 | 50 | 63 | 0.21 | 0.79 | 0.89 |
| **I8** | 60 | 138 | 188 | 0.7 | -0.78 | -2.64 |
| **I8a** | 60 | 73 | 173 | 0.52 | -0.47 | -1.91 |
| **I8b** | 60 | 28 | 53 | | 1.19 | 1.77 |
| **I9** | 80 | 131 | 50 | 0.42 | 1.0 | 1.51 |
| **I10** | 100 | 16 | 84 | 0.28 | 2.55 | 4.91 |
| **I11** | 150 | 15 | 26 | 0.17 | 5.93 | 12.7 |
| **I12** | 200 | 18 | 41 | 0.18 | 4.44 | 9.49 |
| **I13** | 500 | 38 | 73 | 0.17 | 4.73 | 10.17 |
| **I14** | 1000 | 20 | 44 | 0.3 | 4.08 | 9.53 |

**Table 2**

| **Examples** | **c (Na₂CO₃) [ppm, based on the total weight of the first mixture (M1)]** | **c (NaHCO₃) [ppm, based on the total weight of the first mixture (M1)]** | **Extractable FA content (50 min, boiling water) [ppm]** | **Extractable FA content (100 min, boiling water) [ppm]** | **Weight loss under N₂ (222°C, 2h) [%]** | **b* (blue-yellow axis)** | **Yellowness Index, YI** |
|---|---|---|---|---|---|---|---|
| **I15** | 0 | 64 | 179 | 379 | 0.96 | -1.29 | -3.83 |
| **I16** | 0 | 96 | 91 | 133 | 0.74 | -0.71 | -2.25 |
| **I17** | 0 | 160 | 45 | 51 | 0.39 | 0.6 | 0.54 |
| **I18** | 0 | 320 | 35 | 73 | 0.21 | 5.47 | 11.72 |
| **I19** | 30 | 32 | 54 | 84 | | 1.24 | 1.87 |
| **I20** | 30 | 64 | 47 | 86 | | 0.69 | 0.78 |
| **I21** | 30 | 96 | 9 | 13 | | 2.56 | 4.98 |
| **I22** | 30 | 160 | 8 | 22 | | 5.04 | 10.58 |
| **I23** | 40 | 64 | 50 | | 0.37 | 0.38 | 0.01 |
| **I24** | 40 | 160 | 38 | | 0.21 | 3.58 | 7.32 |
| **I25** | 60 | 32 | 49 | 128 | | 0.89 | 1.12 |
| **I26** | 60 | 64 | 33 | 65 | | 1.23 | 2.06 |
| **I27** | 60 | 96 | 45 | 60 | | 4.31 | 8.91 |

**Table 3**

| **Examples** | **c (Ca(OH)₂) [ppm, based on the total weight of the first mixture (M1)]** | **Extractable FA content (50 min, boiling water) [ppm]** | **Extractable FA content (100 min, boiling water) [ppm]** | **Weight loss under N₂ (222°C, 2h) [%]** | **b* (blue-yellow axis)** | **Yellowness Index, YI** |
|---|---|---|---|---|---|---|
| **C28** | 100 | 220 | 182 | 0.3 | 0.77 | 0.60 |
| **C28a** | 100 | 140 | 210 | 0.36 | 0.96 | 1.24 |
| **C28b** | 100 | 200 | 500 | 0.51 | -0.91 | -3.18 |
| **C29** | 150 | 10 | 129 | 0.21 | 3.19 | 6.05 |
| **C29a** | 150 | | 70 | 0.21 | 4.28 | 8.67 |
| **C29b** | 150 | | | 0.29 | 6.57 | 14.04 |

The results in tables 1 to 3 show that the use of carbonate and/or sodium hydrogen carbonate (component (B)) for the deactivation of the catalyst leads to a lower extractable FA content compared to the deactivator Ca(OH)₂ which is used in the state of the art. To achieve an acceptable low extractable FA content, by using component (B), a concentration of only 40 ppm sodium carbonate or 160 ppm sodium hydrogencarbonate is necessary yielding products within the desired color range, whereas, by using Ca(OH)₂, a concentration of at least 150 ppm is necessary, already causing significant yellowish discoloration. Combinations of sodium carbonate and sodium hydrogencarbonate allow also low extracable FA content and neutral color at the same time. Moreover, the use of components (A) and (B) in proper concentrations has no negative influence on the color of cPOM. In contrast, deactivation with calcium hydroxide leads to products with white color but high extractable FA content, or with low extractable FA content but inacceptable yellow-brownish discoloration.

### Inventive examples 131 to 162 and comparative example C30

**Table 4**

| **Examples** | **c (7.51wt.-% solution of component (A) in ethyl acetate) [%, based on the total weight of the first mixture (M1)]** | **c (5 wt.-% aqueous solution/slurry of Na₂CO₃) [%, based on the total weight of the first mixture (M1)]** | **c (5 wt.-% aqueous solution/slurry of NaHCO₃) [%, based on the total weight of the first mixture (M1)]** | **Addition mode** | **Time [min]** | **Remarks** | **b* (blue-yellow axis)** | **Yellowness Index, YI** | **Extractable FA content (50 min, in boiling water) [ppm]** | **Weight loss under N₂ (222°C, 2h) [%]** |
|---|---|---|---|---|---|---|---|---|---|---|
| C30 | 0.519 | --- | --- | --- | 60 | only component (A) | -2.14 | -5.80 | 74.20 | 0.98 |
| I31 | 0.519 | 0.10 | --- | simultaneously | 60 | components (A) and (B) in two syringes simultaneously | -0.40 | -1.67 | 63.0 | 0.86 |
| I32 | 0.519 | 0.14 | --- | simultaneously | 60 | components (A) and (B) in two syringes simultaneously | 1.30 | 2.24 | 12.6 | 0.47 |
| I33 | 0.519 | 0.14 | --- | 2 steps | 60 | 1) component (A) | 2.99 | 6.08 | 15.4 | 0.35 |
| | | | | | | 2) component (B) + additive mixture simultaneously | | | | |
| I34 | 0.519 | 0.14 | --- | split | 60 / 60 | 1) component (A) | 2.71 | 5.49 | 25.2 | 0.52 |
| | | | | | | 2) component (B) | | | | |
| | | | | | | 3) additive mixture | | | | |
| I35 | 0.519 | 0.14 | --- | split | 30 / 60 | 1) component (A) | 2.77 | 5.56 | 8.4 | 0.43 |
| | | | | | | 2) component (B) | | | | |
| | | | | | | 3) additive mixture | | | | |
| I36 | 0.519 | 0.14 | --- | split | 15 / 60 | 1) component (A) | 3.76 | 7.95 | 22.4 | 0.49 |
| | | | | | | 2) component (B) | | | | |
| | | | | | | 3) additive mixture | | | | |
| I37 | 0.519 | 0.14 | --- | split | 60 / 30 | 1) component (A) | 3.61 | 7.41 | 9.8 | 0.56 |
| | | | | | | 2) component (B) | | | | |
| | | | | | | 3) additive mixture | | | | |
| I38 | 0.519 | 0.14 | --- | split | 60 / 15 | 1) component (A) | 3.80 | 7.97 | 15.4 | 0.48 |
| | | | | | | 2) component (B) | | | | |
| | | | | | | 3) additive mixture | | | | |
| I39 | 0.519 | 0.14 | --- | split | 30 / 30 | 1) component (A) | 2.41 | 4.71 | 19.6 | 0.64 |
| | | | | | | 2) component (B) | | | | |
| | | | | | | 3) additive mixture | | | | |
| 140 | 0.519 | 0.18 | --- | simultaneously | 60 | components (A) and (B) in two syringes simultaneously | 3.33 | 7.15 | 11.2 | 0.49 |
| 141 | 0.519 | --- | 0.24 | simultaneously | 60 | components (A) and (B) in two syringes simultaneously | 3.02 | 6.21 | 7.0 | 0.55 |
| 142 | 0.519 | --- | 0.30 | simultaneously | 60 | components (A) and (B) in two syringes simultaneously | 4.80 | 10.26 | 9.8 | 0.92 |
| 143 | 0.519 | --- | 0.30 | 2 steps | 60 | 1) component (A) | 4.58 | 9.85 | 5.6 | 0.38 |
| | | | | | | 2) component (B) + additive mixture simultaneously) | | | | |
| 144 | 0.519 | --- | 0.30 | split | 60 / 60 | 1) component (A) | 2.47 | 4.87 | 15.4 | 0.44 |
| | | | | | | 2) component (B) | | | | |
| | | | | | | 3) additive mixture | | | | |
| 145 | 0.519 | --- | 0.30 | split | 30 / 60 | 1) component (A) | 7.69 | 18.15 | 8.4 | 0.36 |
| | | | | | | 2) component (B) | | | | |
| | | | | | | 3) additive mixture | | | | |
| 146 | 0.519 | --- | 0.30 | split | 15 / 60 | 1) component (A) | 6.28 | 14.43 | 12.6 | 0.38 |
| | | | | | | 2) component (B) | | | | |
| | | | | | | 3) additive mixture | | | | |
| 147 | 0.519 | --- | 0.30 | split | 60 / 30 | 1) component (A) | 4.00 | 8.67 | 14.0 | 0.46 |
| | | | | | | 2) component (B) | | | | |
| | | | | | | 3) additive mixture | | | | |
| 148 | 0.519 | --- | 0.30 | split | 60 / 15 | 1) component (A) | 4.84 | 10.58 | 8.4 | 0.41 |
| | | | | | | 2) component (B) | | | | |
| | | | | | | 3) additive mixture | | | | |
| 149 | 0.519 | --- | 0.30 | split | 30 / 30 | 1) component (A) | 4.60 | 9.93 | 15.4 | 0.46 |
| | | | | | | 2) component (B) | | | | |
| | | | | | | 3) additive mixture | | | | |
| 150 | 0.519 | --- | 0.36 | simultaneously | 60 | components (A) and (B) in two syringes simultaneously | 4.12 | 8.76 | 8.4 | 0.37 |
| 151 | 0.519 | 0.11 | --- | simultaneously | 60 | components (A) and (B) in two syringes simultaneously | --- | --- | --- | 0.26 |
| 152 | 0.519 | 0.11 | --- | split | 30 / 30 | 1) component (A) | --- | --- | --- | 0.43 |
| | | | | | | 2) component (B) | | | | |
| | | | | | | 3) additive mixture | | | | |
| 153 | 0.519 | 0.11 | --- | 2 steps | 60 | 1) component (A) | --- | --- | --- | 0.30 |
| | | | | | | 2) component (B) + additive mixture simultaneously) | | | | |
| I54 | 0.519 | 0.125 | --- | simultaneously | 60 | components (A) and (B) in two syringes simultaneously | --- | --- | --- | 0.22 |
| I55 | 0.519 | 0.125 | --- | split | 30 / 30 | 1) component (A) | --- | --- | --- | 0.17 |
| | | | | | | 2) component (B) | | | | |
| | | | | | | 3) additive mixture | | | | |
| I56 | 0.519 | 0.125 | --- | 2 steps | 60 | 1) component (A) | --- | --- | --- | 0.12 |
| | | | | | | 2) component (B) + additive mixture simultaneously) | | | | |
| I57 | 0.519 | --- | 0.15 | simultaneously | 60 | components (A) and (B) in two syringes simultaneously | --- | --- | --- | 0.08 |
| I58 | 0.519 | --- | 0.15 | split | 30 / 30 | 1) component (A) | --- | --- | --- | 0.15 |
| | | | | | | 2) component (B) | | | | |
| | | | | | | 3) additive mixture | | | | |
| I59 | 0.519 | --- | 0.15 | 2 steps | 60 | 1) component (A) | --- | --- | --- | 0.28 |
| | | | | | | 2) component (B) + additive mixture simultaneously) | | | | |
| I60 | 0.519 | --- | 0.20 | simultaneously | 60 | components (A) and (B) in two syringes simultaneously | --- | --- | --- | 0.29 |
| I61 | 0.519 | --- | 0.20 | split | 30 / 30 | 1) component (A) | --- | --- | --- | 0.28 |
| | | | | | | 2) component (B) | | | | |
| | | | | | | 3) additive mixture | | | | |
| I62 | 0.519 | --- | 0.20 | 2 steps | 60 | 1) component (A) | --- | --- | --- | 0.43 |
| | | | | | | 2) component (B) + additive mixture simultaneously) | | | | |

**Table 5**

| | **Deactivation** | | **Fusing of the mixture (M2)** | | **Press conditions at 50 bar** | | **FA content by days [ppm]** | | | | |
|---|---|---|---|---|---|---|---|---|---|---|---|
| **Examples** | | **c [ppm, based on the total weight of the first mixture (M1)]** | **T [°C]** | **t [min]** | **T [°C]** | **t [min]** | **1** | **2** | **3** | **6** | **7** |
| **C28** | Ca(OH)₂ | 100 | 210 | 10 | 190 | 4.5 | 28.57 | 18.01 | 15.84 | --- | 9.63 |
| **C29** | Ca(OH)₂ | 150 | 210 | 10 | 190 | 4.5 | 41.61 | 18.01 | 16.15 | --- | 10.87 |
| **I5** | Na₂CO₃ | 40 | 210 | 10 | 190 | 4.5 | 3.11 | 1.24 | 1.55 | --- | 0.93 |
| **I32** | Na₂CO₃ | 70 | 210 | 10 | 190 | 4.5 | 1.83 | 0.62 | 0.47 | 0.31 | 0.37 |
| **I35** | Na₂CO₃ | 70 | 210 | 10 | 190 | 4.5 | 1.80 | 0.62 | 0.47 | 0.28 | 0.34 |
| **I39** | Na₂CO₃ | 70 | 210 | 10 | 190 | 4.5 | 1.74 | 0.56 | 0.50 | 0.37 | 0.40 |
| **I32a** | Na₂CO₃ | 70 | 210 | 120 | 190 | 5 | 15.40 | 1.99 | 1.46 | 0.99 | 0.99 |
| **I32b** | Na₂CO₃ | 70 | 210 | 120 | 190 | 5 | 18.20 | 1.06 | 0.78 | 0.53 | 0.62 |
| **I51** | Na₂CO₃ | 55 | 210 | 10 | 190 | 5 | 5.84 | 1.71 | 1.06 | 0.87 | 0.99 |
| **I52** | Na₂CO₃ | 55 | 210 | 10 | 190 | 5 | 6.65 | 1.77 | 1.27 | 0.84 | 0.96 |
| **I53** | Na₂CO₃ | 55 | 210 | 10 | 190 | 5 | 7.02 | 1.77 | 1.06 | 0.78 | 0.99 |
| **I54** | Na₂CO₃ | 62.5 | 210 | 10 | 190 | 5 | 6.02 | 2.14 | 1.37 | 0.99 | 1.21 |
| **I55** | Na₂CO₃ | 62.5 | 210 | 10 | 190 | 5 | 5.59 | 1.71 | 0.96 | 0.90 | 1.06 |
| **I56** | Na₂CO₃ | 62.5 | 210 | 10 | 190 | 5 | 6.27 | 1.65 | 0.96 | 0.96 | 1.27 |
| **I57** | NaHCO₃ | 75 | 210 | 10 | 190 | 5 | 6.21 | 1.93 | 2.64 | 0.71 | 0.81 |
| **I58** | NaHCO₃ | 75 | 210 | 10 | 190 | 5 | 6.58 | 2.39 | 2.45 | 0.81 | 0.78 |
| **I59** | NaHCO₃ | 75 | 210 | 10 | 190 | 5 | 28.57 | 18.01 | 15.84 | --- | 9.63 |
| **I60** | NaHCO₃ | 100 | 210 | 10 | 190 | 5 | 41.61 | 18.01 | 16.15 | --- | 10.87 |
| **I61** | NaHCO₃ | 100 | 210 | 10 | 190 | 5 | 3.11 | 1.24 | 1.55 | --- | 0.93 |
| **I62** | NaHCO₃ | 100 | 210 | 10 | 190 | 5 | 1.83 | 0.62 | 0.47 | 0.31 | 0.37 |

**Table 6**

| | **Deactivation** | | **Press conditions at 50 bar** | | **FA content by days [ppm]** | | | | |
|---|---|---|---|---|---|---|---|---|---|
| **Comparative examples** | | **c [ppm, based on the total weight of the first mixture (M1)]** | **T [°C]** | **t [min]** | **1** | **2** | **3** | **6** | **7** |
| **C63** | Ca(OH)₂ | 90 | 190 | 4.5 | 10.0 | | 10.4 | 9.3 | 9,7 |
| **C64** | Ca(OH)₂ | 90 | Injection-molded from Ultraform^{®}ex production | | 52.5 | 63.8 | 44.7 | 32.0 | 30.1 |
| **C65** | Ca(OH)₂ | 150 | Injection-molded from Ultraform^{®}ex production | | 79.4 | 85.8 | 47.9 | 27.5 | 30.1 |

### Pilot scale examples:

### • Inventive examples I66 to I71 and comparative example C75

### a) Materials

The following components are used:
(1) Raw cPOM (corresponds to the first mixture (M1))
   300 g (96.5% by weight based on the total amount of the used monomers) 1,3,5-trioxane are melted at 80°C in a 500 mL aluminium bottle. In parallel, 10.88 g 1,3-dioxolane (3.5% by weight based on the total amount of the used monomers) are placed in a screw-cap jar at room temperature and mixed with 2.80 g (3,10 mL) boron trifluoride diethyl etherate (0.9% in ethyl acetate, corresponds to 0.0252 g boron trifluoride diethyl etherate (81 ppm based on the total amount of the used monomers)). This mixture is added to the 1,3,5-trioxane melt with a syringe, the needle reaching almost to the bottom. After a short swirl, within 1 to 2 seconds, the initiated mixture is immediately poured onto a kneader (2 litre mixing and kneading machine type LKS 1 from Linden, usable volume: 1 litre), which has been tempered to 60°C. After a few seconds, the viscosity of the liquid mixture increases, it becomes cloudy, first doughy and then solid, being ground by the two rotating kneading blades (speed: 75 rpm). The raw cPOM is finally converted to powder form. After 5 minutes, the accretions on the wall and kneading elements are poked down briefly (3 minutes) and ground in the further course (5 minutes) as well.
(2) Used components for the deactivation:
   For the deactivation, the same components as described above under the ***Laboratory scale examples*** are used.
(3) Additives:
   The same additives as described above under the ***Laboratory scale examples*** are used.

### b) Deactivation of the catalyst and production of polymer molding compositions

### Step a)

Step a) is carried out as described under a) Materials (1).

### Steps b), c) and d)

### Adding component (A)

1.60 g Triisopropanolamine solution is spread over the raw cPOM powder with a syringe. The Triisopropanolamine solution is prepared by mixing 3.9 g of an 85 wt.-% aqueous Triisopropanolamine and 48.1 g ethyl acetate. The treated powder is kneaded for 5 minutes at 60°C. Then, it is removed from the kneader and ground into a powder in a Vorwerk Thermomix machine (Yield: 290 g; 93 %). The powder is then tempered in a 2 litre HWS vessel with a Teflon blade stirrer at 60°C for 1 hour under nitrogen.
Total yield: 255 g (85 %)
*Adding component (B), or Ca(OH)₂ (for comparison), respectively, and adding of additives*
According to Table 7, component (B)/Ca(OH)₂ and the additives are added to a 250 mL HWS vessel, the powder mixture is stirred vigorously with a blade stirrer for 30 minutes at 50°C under a gentle stream of nitrogen, and then melted at 210°C (step d)).

### c) Analytical methods

The same analytical methods as described above under the ***Laboratory scale examples*** are used.

### d) Results

**Table 7**

| **Examples** | **Component (B)/ Ca(OH)₂** | **c (Component (B)/ Ca(OH)₂) [ppm, based on the total weight of the first mixture (M1)]** | **Processing** | **Weight loss under N₂ (222°C, 2h) [%]** | **b*** | **Yellowness Index, YI** |
|---|---|---|---|---|---|---|
| **C75a** | Ca(OH)₂ | 100 | Calotte | 0.58 | 4.97 | 12.22 |
| **I66a** | Na₂CO₃/Water | 62.5 | Calotte | 1.34 | -0.12 | 0.69 |
| **I67a** | Na₂CO₃ Powder | 60 | Calotte | 0.92 | -0.80 | -1.01 |
| **I68a** | Na₂CO₃ Powder | 66 | Calotte | 0.12 | 1.66 | 4.01 |
| **I69a** | Na₂CO₃ Powder | 72 | Calotte | 0.06 | 2.13 | 5.49 |
| **I70a** | Na₂CO₃ Powder | 90 | Calotte | 0.32 | 2.10 | 5.56 |
| **I71a** | Na₂CO₃ Powder | 120 | Calotte | 0.27 | 7.99 | 20.62 |
| **C75b** | Ca(OH)₂ | 100 | Extrusion 5 min | 2.22 | -1.69 | -2.82 |
| **I66b** | Na₂CO₃/Water | 62.5 | Extrusion 5 min | 3.47 | -1.13 | -1.21 |
| **I67b** | Na₂CO₃ Powder | 60 | Extrusion 5 min | 2.91 | 0.26 | 1.89 |
| **I68b** | Na₂CO₃ Powder | 66 | Extrusion 5 min | 1.16 | -0.23 | 0.67 |
| **I69b** | Na₂CO₃ Powder | 72 | Extrusion 5 min | 1.34 | -0.71 | -0.49 |
| **I70b** | Na₂CO₃ Powder | 90 | Extrusion 5 min | 1.26 | 3.23 | 8.50 |
| **I71b** | Na₂CO₃ Powder | 120 | Extrusion 5 min | 1.12 | 2.07 | 6.00 |
| **C75c** | Ca(OH)₂ | 100 | Extrusion 10 min | 1.91 | -1.83 | -3.26 |
| **I66c** | Na₂CO₃/Water | 62.5 | Extrusion 10 min | 3.60 | -0.35 | 0.37 |
| **I67c** | Na₂CO₃ Powder | 60 | Extrusion 10 min | 1.68 | -1.16 | -1.71 |
| **I68c** | Na₂CO₃ Powder | 66 | Extrusion 10 min | 1.25 | -1.74 | -7.39 |
| **I69c** | Na₂CO₃ Powder | 72 | Extrusion 10 min | 1.72 | 2.63 | 7.80 |
| **I70c** | Na₂CO₃ Powder | 90 | Extrusion 10 min | 1.42 | 2.75 | 7.81 |
| **I71c** | Na₂CO₃ Powder | 120 | Extrusion 10 min | 1.34 | 3.14 | 8.14 |

Table 7 shows that for calottes 60 to 66 ppm solid sodium carbonate (Na₂CO₃) forms the best compromise between weight loss and yellowness index, while calcium hydroxide (Ca(OH)₂) is inferior in color at comparable weight loss. 5 min extrusion require 66 to 72 ppm of sodium carbonate powder for similar results and 10 min extrusion about 66 ppm. The efficiency of the grinded sodium carbonate powder is similar to the aqueous sodium carbonate solution.

## Claims

1. Method for the deactivation of an acid catalyst during the production process of a polyoxymethylene copolymer (cPOM), wherein the method for the deactivation of the acid catalyst comprises the steps:
a) providing a first mixture (M1) comprising the polyoxymethylene copolymer (cPOM) and the acid catalyst,
b) adding
(A) triisopropanolamine and/or
(B) sodium carbonate and/or sodium hydrogen carbonate
to the first mixture (M1) to deactivate the acid catalyst in order to obtain a second mixture (M2) comprising
the polyoxymethylene copolymer (cPOM) and
a complex of the acid catalyst with component (A) and/or
a reaction product of the acid catalyst with component (B),
c) optionally adding at least one additive to the second mixture (M2),
d) treating the second mixture (M2) at a temperature in the range from 180 to 280 °C under vacuum in order to obtain a third mixture (M3).

2. Method according to claim 1, wherein the polyoxymethylene copolymer (cPOM) comprises from 60 to 99.99 mol% of -CH₂O- recurring units and from 0.01 to 40 mol% of recurring units according to formula (I) 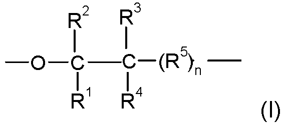 where R¹ to R⁴ are each, independently of one another, a hydrogen atom, a C₁-C₄-alkyl group or an alkoxy-substituted alkyl group having from 1 to 4 carbon atoms and R⁵ is a chemical bond, a -CH₂-, -OCH₂-, a C₁-C₄-alkyl- or C₁-C₄-alkoxy-substituted methylene group or a corresponding oxymethylene group and n is from 0 to 3.

3. Method according to claim 1 or 2, wherein step a) comprises the step:
a1) polymerization of at least one main monomer selected from the group of cyclic formals, and at least one first comonomer selected from the group of those of the formula (II) 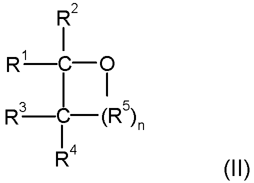 where R¹ to R⁵ and n are as defined above in claim 2, and optionally at least one second comonomer, in the presence of the acid catalyst, in order to provide the first mixture (M1) comprising the polyoxymethylene copolymer (cPOM) and the acid catalyst.

4. Method according to any of claims 1 to 3, wherein the acid catalyst
i) is at least one acid catalyst selected from the group consisting of boron trifluoride, a coordination complex of boron trifluoride with water, a coordination complex of boron trifluoride with a dialkyl ether and catalytic active transformation product of the aforementioned acid catalyst, and/or
ii) in step a) is present in an amount of from 10 to 150 ppm based on the total weight of the first mixture (M1), and/or
iii) in step a1) is present in an amount of from 10 to 150 ppm based on the total weight of the main monomers and the comonomers.

5. Method according to any of claims 1 to 4, wherein in step b) component (A) and component (B) are added simultaneously.

6. Method according to any of claims 1 to 4, wherein in step b) component (A) is added prior to component (B).

7. Method according to any of claims 1 to 6, wherein in step b) component (A) is added in form of a solution (S_{A}) comprising the component (A) dissolved in at least one solvent (C_{A}) and component (B) is added in form of a solution (S_{B}) comprising the component (B) dissolved in at least one solvent (C_{B}).

8. Method according to claim 7, wherein
i) the solution (S_{A}) comprises ethyl acetate and/or water as a solvent (C_{A}), and/or
ii) the solution (S_{B}) comprises water as a solvent (C_{B}).

9. Method according to any of claims 1 to 4, wherein in step b) component (A) is added prior to component (B) and component (B) is added simultaneously with at least one additive.

10. Method according to any of claims 1 to 9, wherein in step b), additionally to component (A),
i) only sodium carbonate is added to the first mixture (M1) in a concentration in the range from 30 to 120 ppm based on the total weight of the first mixture (M1), or
ii) only sodium hydrogen carbonate is added to the first mixture (M1) in a concentration in the range from 100 to 300 ppm based on the total weight of the first mixture (M1), or
iii) sodium carbonate is added in a concentration in the range from 30 to 60 ppm based on the total weight of the first mixture (M1) and sodium hydrogen carbonate is added in a concentration in the range from 30 to 200 ppm based on the total weight of the first mixture (M1) to the first mixture (M1).

11. Use of
(A) triisopropanolamine and
(B) sodium carbonate and/or sodium hydrogen carbonate
for the deactivation of an acid catalyst during the production of a polyoxymethylene copolymer (cPOM).

12. Method for the production of a polymer molding composition (PM) comprising the steps:
a1) polymerization of at least one main monomer selected form the group of cyclic formals, and at least one first comonomer selected from the group of those of the formula (II) 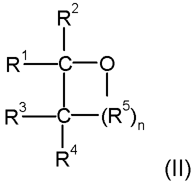 where R¹ to R⁵ and n are as defined above in claim 2, and optionally at least one second comonomer, in the presence of an acid catalyst, in order to provide a first mixture (M1) comprising a polyoxymethylene copolymer (cPOM) and the acid catalyst,
b) adding
(A) triisopropanolamine and
(B) sodium carbonate and/or sodium hydrogen carbonate
to the first mixture (M1) to deactivate the acid catalyst in order to obtain a second mixture (M2) comprising
the polyoxymethylene copolymer (cPOM) and
a complex of the acid catalyst with component (A) and
a reaction product of the acid catalyst with component (B),
c) optionally adding at least one additive to the second mixture (M2),
d) treating the second mixture (M2) at a temperature in the range from 180 to 280 °C under vacuum to obtain a third mixture (M3).

13. Polymer molding composition (PM) obtained by the method according to claim 12.

14. Use of the polymer molding composition (PM) according to claim 12 or 13 for the production of molded parts.

## Patentansprüche

1. Verfahren zur Deaktivierung eines Säurekatalysators während des Herstellungsverfahrens eines Polyoxymethylen-Copolymers (cPOM), wobei das Verfahren zur Deaktivierung des Säurekatalysators die Schritte umfasst:
a) Bereitstellen eines ersten Gemischs (M1) umfassend das Polyoxymethylen-Copolymer (cPOM) und den Säurekatalysator,
b) Zugeben von
(A) Triisopropanolamin und/oder
(B) Natriumcarbonat und/oder Natriumhydrogencarbonat zu dem ersten Gemisch (M1) zum Deaktivieren des Säurekatalysators, um ein zweites Gemisch (M2) zu erhalten, das umfasst
das Polyoxymethylen-Copolymer (cPOM) und
einen Komplex des Säurekatalysators mit Komponente (A) und/oder
ein Reaktionsprodukt des Säurekatalysators mit Komponente (B),
c) gegebenenfalls Zugeben wenigstens eines Additivs zu dem zweiten Gemisch (M2),
d) Behandeln des zweiten Gemischs (M2) bei einer Temperatur in dem Bereich von 180 bis 280 °C unter Vakuum, um ein drittes Gemisch (M3) zu erhalten.

2. Verfahren nach Anspruch 1, wobei das Polyoxymethylen-Copolymer (cPOM) von 60 bis 99,99 mol-% an -CH₂O-Wiederholungseinheiten und von 0,01 bis 40 mol-% an Wiederholungseinheiten gemäß Formel (I) umfasst, 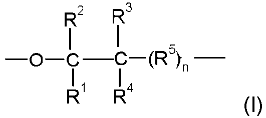 wobei R¹ bis R⁴ unabhängig voneinander jeweils ein Wasserstoffatom, eine C₁-C₄-Alkylgruppe oder eine alkoxysubstituierte Alkylgruppe mit von 1 bis 4 Kohlenstoffatomen sind und R⁵ eine chemische Bindung, eine -CH₂-, -OCH₂-, C₁-C₄-Alkyl- oder C₁-C₄-Alkoxysubstituierte Methylengruppe oder eine entsprechende Oxymethylengruppe ist und n von 0 bis 3 beträgt.

3. Verfahren nach Anspruch 1 oder 2, wobei Schritt a) den Schritt umfasst:
a1) Polymerisation wenigstens eines Hauptmonomers ausgewählt aus der Gruppe von cyclischen Formalen und wenigstens eines ersten Comonomers ausgewählt aus der Gruppe von jenen der Formel (II) 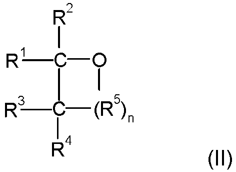 wobei R¹ bis R⁵ und n wie oben in Anspruch 2 definiert sind, und gegebenenfalls wenigstens eines zweiten Comonomers, in Gegenwart des Säurekatalysators, um das erste Gemisch (M1) umfassend das Polyoxymethylen-Copolymer (cPOM) und den Säurekatalysator bereitzustellen.

4. Verfahren nach einem der Ansprüche 1 bis 3, wobei der Säurekatalysator
i) wenigstens ein Säurekatalysator ausgewählt aus der Gruppe bestehend aus Bortrifluorid, einem Koordinationskomplex von Bortrifluorid mit Wasser, einem Koordinationskomplex von Bortrifluorid mit einem Dialkylether und katalytisch aktivem Umwandlungsprodukt des obengenannten Säurekatalysators ist und/oder
ii) bei Schritt a) in einer Menge von 10 bis 150 ppm, bezogen auf das Gesamtgewicht des ersten Gemischs (M1), vorhanden ist und/oder
iii) bei Schritt a1) in einer Menge von 10 bis 150 ppm, bezogen auf das Gesamtgewicht der Hauptmonomere und der Comonomere, vorhanden ist.

5. Verfahren nach einem der Ansprüche 1 bis 4, wobei bei Schritt b) Komponente (A) und Komponente (B) gleichzeitig zugegeben werden.

6. Verfahren nach einem der Ansprüche 1 bis 4, wobei bei Schritt b) Komponente (A) vor Komponente (B) zugegeben wird.

7. Verfahren nach einem der Ansprüche 1 bis 6, wobei bei Schritt b) Komponente (A) in der Form einer Lösung (S_{A}) zugegeben wird, die die Komponente (A) gelöst in wenigstens einem Lösungsmittel (C_{A}) umfasst, und Komponente (B) in der Form einer Lösung (S_{B}) zugegeben wird, die die Komponente (B) gelöst in wenigstens einem Lösungsmittel (C_{B}) umfasst.

8. Verfahren nach Anspruch 7, wobei
i) die Lösung (S_{A}) Ethylacetat und/oder Wasser als ein Lösungsmittel (C_{A}) umfasst und/oder
ii) die Lösung (S_{B}) Wasser als ein Lösungsmittel (C_{B}) umfasst.

9. Verfahren nach einem der Ansprüche 1 bis 4, wobei bei Schritt b) Komponente (A) vor Komponente (B) zugegeben wird und Komponente (B) gleichzeitig mit wenigstens einem Additiv zugegeben wird.

10. Verfahren nach einem der Ansprüche 1 bis 9, wobei bei Schritt b) zusätzlich zu Komponente (A)
i) nur Natriumcarbonat in einer Konzentration in dem Bereich von 30 bis 120 ppm, bezogen auf das Gesamtgewicht des ersten Gemischs (M1), zu dem ersten Gemisch (M1) zugegeben wird, oder
ii) nur Natriumhydrogencarbonat in einer Konzentration in dem Bereich von 100 bis 300 ppm, bezogen auf das Gesamtgewicht des ersten Gemischs (M1), zu dem ersten Gemisch (M1) zugegeben wird, oder
iii) Natriumcarbonat in einer Konzentration in dem Bereich von 30 bis 60 ppm, bezogen auf das Gesamtgewicht des ersten Gemischs (M1), und Natriumhydrogencarbonat in einer Konzentration in dem Bereich von 30 bis 200 ppm, bezogen auf das Gesamtgewicht des ersten Gemischs (M1), zu dem ersten Gemisch (M1) zugegeben wird.

11. Verwendung von
(A) Triisopropanolamin und
(B) Natriumcarbonat und/oder Natriumhydrogencarbonat zur Deaktivierung eines Säurekatalysators bei der Herstellung eines Polyoxymethylen-Copolymers (cPOM).

12. Verfahren zur Herstellung einer Polymerformmasse (PM), umfassend die Schritte:
a1) Polymerisation wenigstens eines Hauptmonomers ausgewählt aus der Gruppe von cyclischen Formalen und wenigstens eines ersten Comonomers ausgewählt aus der Gruppe von jenen der Formel (II) 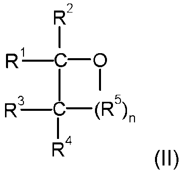 wobei R¹ bis R⁵ und n wie oben in Anspruch 2 definiert sind, und gegebenenfalls wenigstens eines zweiten Comonomers, in Gegenwart eines Säurekatalysators, um ein erstes Gemisch (M1) umfassend ein Polyoxymethylen-Copolymer (cPOM) und den Säurekatalysator bereitzustellen,
b) Zugeben von
(A) Triisopropanolamin und
(B) Natriumcarbonat und/oder Natriumhydrogencarbonat zu dem ersten Gemisch (M1) zum Deaktivieren des Säurekatalysators, um ein zweites Gemisch (M2) zu erhalten, das umfasst
das Polyoxymethylen-Copolymer (cPOM) und
einen Komplex des Säurekatalysators mit Komponente (A) und
ein Reaktionsprodukt des Säurekatalysators mit Komponente (B),
c) gegebenenfalls Zugeben wenigstens eines Additivs zu dem zweiten Gemisch (M2),
d) Behandeln des zweiten Gemischs (M2) bei einer Temperatur in dem Bereich von 180 bis 280 °C unter Vakuum, um ein drittes Gemisch (M3) zu erhalten.

13. Polymerformmasse (PM), erhalten nach dem Verfahren nach Anspruch 12.

14. Verwendung der Polymerformmasse (PM) nach Anspruch 12 oder 13 zur Herstellung von Formteilen.

## Revendications

1. Procédé de désactivation d'un catalyseur de type acide lors du procédé de production d'un copolymère de polyoxyméthylène (cPOM), dans lequel le procédé de désactivation du catalyseur de type acide comprend les étapes :
a) fourniture d'un premier mélange (M1) comprenant le copolymère de polyoxyméthylène (cPOM) et le catalyseur de type acide,
b) ajout de
(A) triisopropanolamine et/ou
(B) carbonate de sodium et/ou hydrogénocarbonate de sodium
au premier mélange (M1) pour désactiver le catalyseur de type acide pour obtenir un deuxième mélange (M2) comprenant
le copolymère de polyoxyméthylène (cPOM) et
un complexe du catalyseur de type acide avec le composant (A) et/ou
un produit de réaction du catalyseur de type acide avec le composant (B),
c) éventuellement ajout d'au moins un additif au deuxième mélange (M2),
d) traitement du deuxième mélange (M2) à une température dans la plage de 180 à 280 °C sous vide pour obtenir un troisième mélange (M3).

2. Procédé selon la revendication 1, dans lequel le copolymère de polyoxyméthylène (cPOM) comprend de 60 à 99,99 % en moles de motifs répétitifs -CH₂O- et de 0,01 à 40 % en moles de motifs répétitifs selon la formule (I) 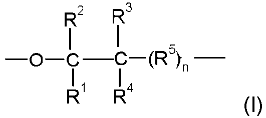 où R¹ à R⁴ sont chacun, indépendamment les uns des autres, un atome d'hydrogène, un groupe alkyle en C₁-C₄ ou un groupe alkyle substitué par alcoxy ayant de 1 à 4 atomes de carbone et R⁵ est une liaison chimique, un -CH₂-, - OCH₂-, un groupe méthylène substitué par alkyle en C₁-C₄ ou alcoxy en C₁-C₄ ou un groupe oxyméthylène correspondant, et n est de 0 à 3.

3. Procédé selon la revendication 1 ou 2, dans lequel l'étape a) comprend l'étape :
a1) polymérisation d'au moins un monomère principal choisi dans le groupe des formals cycliques, et d'au moins un premier comonomère choisi dans le groupe de ceux de formule (II) 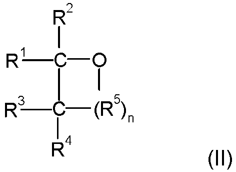 où R¹ à R⁵ et n sont tels que définis ci-dessus dans la revendication 2, et éventuellement au moins un deuxième comonomère, en présence du catalyseur de type acide, pour fournir le premier mélange (M1) comprenant le copolymère de polyoxyméthylène (cPOM) et le catalyseur de type acide.

4. Procédé selon l'une quelconque des revendications 1 à 3, dans lequel le catalyseur de type acide
i) est au moins un catalyseur de type acide choisi dans le groupe constitué par le trifluorure de bore, un complexe de coordination de trifluorure de bore avec l'eau, un complexe de coordination de trifluorure de bore avec un éther de dialkyle et un produit de transformation active catalytique du catalyseur de type acide mentionné précédemment, et/ou
ii) dans l'étape a) est présent en une quantité de 10 à 150 ppm sur la base du poids total du premier mélange (M1), et/ou
iii) dans l'étape a1) est présente en une quantité de 10 à 150 ppm sur la base du poids total des monomères principaux et des comonomères.

5. Procédé selon l'une quelconque des revendications 1 à 4, dans lequel dans l'étape b) le composant (A) et le composant (B) sont ajoutés simultanément.

6. Procédé selon l'une quelconque des revendications 1 à 4, dans lequel, dans l'étape b), le composant (A) est ajouté avant le composant (B).

7. Procédé selon l'une quelconque des revendications 1 à 6, dans lequel, dans l'étape b), le composant (A) est ajouté sous la forme d'une solution (S_{A}) comprenant le composant (A) dissous dans au moins un solvant (C_{A}) et le composant (B) est ajouté sous la forme d'une solution (S_{B}) comprenant le composant (B) dissous dans au moins un solvant (C_{B}).

8. Procédé selon la revendication 7, dans lequel i) la solution (S_{A}) comprend de l'acétate d'éthyle et/ou de l'eau comme solvant (C_{A}), et/ou ii) la solution (S_{B}) comprend de l'eau en tant que solvant (C_{B}).

9. Procédé selon l'une quelconque des revendications 1 à 4, dans lequel, dans l'étape b), le composant (A) est ajouté avant le composant (B) et le composant (B) est ajouté simultanément avec au moins un additif.

10. Procédé selon l'une quelconque des revendications 1 à 9, dans lequel dans l'étape b), en plus du composant (A),
i) seul du carbonate de sodium est ajouté au premier mélange (M1) en une concentration dans la plage de 30 à 120 ppm sur la base du poids total du premier mélange (M1), ou
ii) seul de l'hydrogénocarbonate de sodium est ajouté au premier mélange (M1) en une concentration dans la plage de 100 à 300 ppm sur la base du poids total du premier mélange (M1), ou
iii) du carbonate de sodium est ajouté en une concentration dans la plage de 30 à 60 ppm sur la base du poids total du premier mélange (M1) et de l'hydrogénocarbonate de sodium est ajouté en une concentration dans la plage de 30 à 200 ppm sur la base du poids total du premier mélange (M1) au premier mélange (M1).

11. Utilisation de
(A) triisopropanolamine et
(B) carbonate de sodium et/ou hydrogénocarbonate de sodium
pour la désactivation d'un catalyseur de type acide lors de la production d'un copolymère de polyoxyméthylène (cPOM) .

12. Procédé de production d'une composition de moulage de polymère (PM) comprenant les étapes :
a1) polymérisation d'au moins un monomère principal choisi dans le groupe des formals cycliques, et d'au moins un premier comonomère choisi dans le groupe de ceux de formule (II) 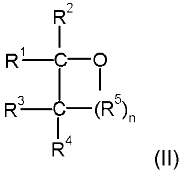 ou R¹ à R⁵ et n sont tels que définis ci-dessus à la revendication 2, et éventuellement d'au moins un deuxième comonomère, en présence d'un catalyseur de type acide, pour fournir un premier mélange (M1) comprenant un copolymère de polyoxyméthylène (cPOM) et le catalyseur de type acide,
b) ajout de
(A) triisopropanolamine et
(B) carbonate de sodium et/ou hydrogénocarbonate de sodium
au premier mélange (M1) pour désactiver le catalyseur de type acide pour obtenir un deuxième mélange (M2) comprenant
le copolymère de polyoxyméthylène (cPOM) et
un complexe du catalyseur de type acide avec le composant (A) et
un produit de réaction du catalyseur de type acide avec le composant (B),
c) éventuellement ajout d'au moins un additif au deuxième mélange (M2),
d) traitement du deuxième mélange (M2) à une température dans la plage de 180 à 280 °C sous vide pour obtenir un troisième mélange (M3).

13. Composition de moulage de polymère (PM) obtenue par le procédé selon la revendication 12.

14. Utilisation de la composition de moulage de polymère (PM) selon la revendication 12 ou 13 pour la production de pièces moulées.
